# FASCICULE DE BREVET EUROPEEN

(11) **EP 3 636 400 B1**
(45) Date de publication et mention de la délivrance du brevet: **30.11.2022**
(21) Numéro de dépôt: 19194123.6
(22) Date de dépôt: 28.08.2019
(51) Int. Cl.: B25J 19/06, B25J 15/00

(54) **PREHENSEUR MODULAIRE POUR PIECE DE CARROSSERIE DE VEHICULE**
MODULARER GREIFER FÜR FAHRZEUG-KAROSSERIETEIL
MODULAR GRIPPER FOR VEHICLE BODY PART

(30) Priorité: 14.09.2018 FR 1858305
(43) Date de publication de la demande: 15.04.2020
(73) Titulaire: PSA Automobiles SA, 78300 Poissy (FR)
(72) Inventeur: LE GUENNEC, Thierry, 35580 Guichen (FR); EPERT, Didier, 22190 Plerin (FR); MORISSET, Philippe, 35740 Pace (FR)

(56) Documents cités:
- WO-A2-2006/123296
- FR-A1- 2 972 702
- JP-A- S6 076 987
- JP-U- S6 229 295
- JP-U- S6 360 590

## Description

L'invention se situe dans le domaine de l'outillage pour le transport ou la manipulation d'éléments de carrosserie destinés, par exemple, à équiper les usines de fabrication de véhicules automobiles. En particulier, l'invention concerne un système de préhension modulaire d'éléments de carrosserie, tels que des panneaux de porte ou des côtés de caisse de véhicule automobile.

Dans les lignes d'emboutissage, de ferrage ou encore de montage, les pièces de carrosserie sont amenées à être déplacées entre différents postes par des robots manipulateurs. Ces robots comprennent un bras au bout duquel se fixe un système de préhension, ou préhenseur, configuré pour tenir une pièce en vue de son déplacement. Lesdits préhenseurs peuvent, par exemple, comprendre une structure porteuse sous forme de tube s'étendant selon une direction principale, sur laquelle sont montés divers outils de préhension positionnés de part et d'autre de la structure porteuse de manière spécifique à la pièce à porter.

Le document WO2006/123296 décrit un dispositif permettant de désaccoupler un élément préhenseur de son dispositif de fixation à un bras du robot.

Les document JPS6360590, JPS6076987, et JPS6229295 décrivent des préhenseurs comportant une partie fusible entre le porte-outil et une pièce de support.

Un exemple d'un tel système de préhension est donné par le document FR2972702. La figure 1 montre un exemple de réalisation d'un système de préhension 1 selon cet art antérieur. Comme on peut le voir, le système de préhension 1 comprend au moins une poutre de structure 3 ; un moyen d'amarrage 5 sur un robot de manipulation monté librement sur la ou les poutres 3 ; plusieurs outils 7 de préhension conçus pour la préhension d'une pièce de carrosserie 9 ; et plusieurs moyens de support 11 des outils 7 de préhension comportant chacun :
- une embase montée réglable en coulissement sur la poutre et réglable en rotation par rapport à la poutre ;
- une coulisse montée réglable en coulissement par rapport à l'embase ; et
- un porte-outil monté réglable en rotation sur la coulisse au moyen d'une pièce de support comprenant une rotule, et portant l'outil de préhension concerné.

Ce système de préhension s'est montré très efficace pour la manipulation des éléments de carrosserie.

Depuis sa conception, ce système de préhension a été amélioré et notamment s'est vu adjoindre un système de protection de ses composants (poutre, moyens de support, outils de préhension) en cas de choc. A cet effet, au moins une pièce de support d'un porte-outil a été dotée d'une zone fusible montrant une résistance mécanique diminuée. Ainsi, en cas de choc, le porte-outil se rompt, ce qui protège le reste du système. Malheureusement, lorsque la pièce de support du porte-outil se rompt au niveau de sa zone fusible, son remplacement occasionne un arrêt de la production. Il s'agit généralement d'un arrêt long car cette pièce, en plus d'une fonction fusible, a également une fonction de réglage de la position de l'outil qu'il porte. La mise au point d'un nouveau réglage lors du remplacement de cette pièce peut parfois prendre jusqu'à trois quarts d'heure, ce qui ne permet pas de respecter les objectifs internes en matière de temps de dépannage.

Une solution reste à trouver pour diminuer le temps de dépannage tout en conservant une fonction de protection des composants du préhenseur au moyen d'une zone fusible.

L'invention a pour objectif de pallier les inconvénients de l'art antérieur en proposant un nouveau système de préhension configuré pour assurer une fonction de protection par zone fusible sans affecter le réglage du ou des porte-outils.

A cet effet, et selon un premier aspect, l'invention a pour objet un préhenseur comprenant au moins une poutre de structure, au moins un outil de préhension et au moins un moyen de support d'un outil de préhension, ledit moyen de support comprenant un bras au bout duquel est monté un porte-outil, le bras comprenant une embase de fixation à une poutre de structure et une pièce de support du porte-outil, le préhenseur étant remarquable en ce que le bras comprend en outre une pièce fusible montrant au moins une zone de résistance mécanique amoindrie de manière à se rompre sous l'application d'une force supérieure à un seuil donné, ladite pièce fusible étant agencée entre la pièce de support du porte-outil et l'embase.

Comme on l'aura compris à la lecture de la définition qui vient d'en être donnée, l'invention consiste à déporter la fonction de protection par zone fusible sur une autre pièce que la pièce de support du porte-outil. Ainsi, l'invention va dissocier la fonction réglage de la fonction fusible de protection de manière à ce qu'il n'y ait pas besoin de régler à nouveau les positions relatives du couple formé par le porte-outil et sa pièce de support en cas de rupture du bras. Une telle configuration permet de diminuer les temps de réparation de manière significative. La pièce de support du porte-outil ne montre plus de zone fusible, cette dernière est montrée par une pièce intermédiaire conçue à cet effet et qui, préférentiellement, ne montre pas de fonction de réglage ou bien un réglage simple selon une seule direction.

Idéalement, le préhenseur comprend en outre une interface de fixation à un bras de robot de manipulation. Ladite interface de fixation est préférentiellement montée fixement sur la ou les poutres de structures.

Avantageusement, le préhenseur comprend au moins deux ensembles dotés chacun un outil de préhension et un moyen de support. De manière encore plus avantageuse, le préhenseur comprend autant d'ensembles formés par un moyen de support et un outil de préhension que nécessaire.

Préférentiellement, au moins une pièce fusible se présente sous une forme de manchon de raccordement configuré pour faire la liaison entre la pièce de support du porte-outil et l'embase ou entre la pièce de support du porte-outil et une coulisse montée sur l'embase. La forme globale de la pièce fusible, sous forme de manchon tubulaire, en fait un composant simple à réaliser et d'un coût modéré qui affecte peu le coût global du préhenseur.

Au moins une pièce fusible est une pièce tubulaire qui présente deux extrémités et un épaulement sur sa longueur de manière à ce qu'une des extrémités montre un diamètre supérieur au diamètre montré par l'autre extrémité. De préférence, l'extrémité de plus grand diamètre est destinée à coopérer avec la pièce de support du porte-outil.

Au moins une pièce fusible montre une zone de résistance mécanique amoindrie agencée à la base de l'épaulement, c'est-à-dire sur la partie de la pièce de plus petit diamètre. De préférence, la zone de résistance amoindrie s'étend sur toute la circonférence de l'extrémité de plus petit diamètre et est agencée à la base de l'épaulement.

Par le dimensionnement de la pièce fusible, le caractère multidirectionnel de sa zone de résistance mécanique amoindrie, et sa position dans l'assemblage ; la pièce fusible concentre les contraintes maximales quel que soit le niveau d'effort appliqué ou la direction de l'effort appliqué sur les différents éléments du préhenseur.

Idéalement, au moins une pièce fusible est insérée par son extrémité de plus petit diamètre dans un corps creux présenté par une embase ou dans un corps creux formé par une coulisse. De préférence, la pièce fusible est insérée dans le corps creux jusqu'à ce que l'extrémité du corps creux vienne se placer en butée contre la surface externe de l'épaulement. Avantageusement, le diamètre d'emmanchement de la pièce fusible dans le corps creux est le même que celui montré par le pied d'ancrage de la pièce de support du porte-outil. Par exemple, ledit diamètre d'emmanchement est compris entre 20 et 25 mm et, de préférence, est de 22 mm. Un rayon de raccordement faible augmente les concentrations de contrainte.

De manière complémentaire ou alternative, au moins une pièce de support du porte-outil comprend un pied d'ancrage inséré dans une pièce fusible ; de préférence, jusqu'à ce que le pied d'ancrage se place en butée contre la surface interne de l'épaulement.

La mise en butée des pièces contre l'épaulement de la pièce fusible permet de s'affranchir d'une étape de réglage du positionnement relatif des pièces et donc d'offrir la possibilité d'un positionnement standardisé et répétable sans effort.

Avantageusement, la ou les pièces fusibles montrant un corps, le préhenseur est remarquable en ce que la zone de résistance mécanique amoindrie d'au moins une pièce fusible est une zone montrant une épaisseur réduite par rapport à l'épaisseur montrée par le reste du corps de ladite pièce fusible.

Eventuellement, au moins un bras est un bras télescopique comprenant une embase et une coulisse montée réglable en coulissement sur ladite embase. Préférentiellement, au moins un bras est télescopique et comprend une embase montée sur la poutre, une coulisse et un manchon, de manière à ce que la coulisse soit montée réglable en coulissement sur ladite embase, et/ou le manchon soit monté réglable en coulissement sur ladite coulisse.

Selon un mode de réalisation particulier, la pièce de support du porte-outil comprend un pied d'ancrage montrant une extrémité libre, le préhenseur est remarquable en ce que la pièce de support du porte-outil comprend un pied d'ancrage de section pleine et/ou en ce que la pièce de support du porte-outil comprend une rotule pour la fixation du porte-outil et l'extrémité libre du pied d'ancrage est disposée à au moins 8 cm du centre de la rotule ; de préférence à au moins 10 cm. La position de la zone de résistance amoindrie par rapport à la charge est plus éloignée dans l'invention par rapport à l'art antérieur, cela permet de rendre le préhenseur plus tolérant aux sollicitations engendrées par les applications sévères des procédés de ferrage et élimine les casses inopinées. Le préhenseur est plus solide tout en conservant une fonction fusible de protection.

Optionnellement, la pièce fusible est réalisée en un alliage d'aluminium de type 7075. L'emploi de ce matériau est avantageux en ce qu'il est plus cassant que l'acier dont est confectionnée la pièce de support du porte-outil. Aussi, lorsque la limite élastique est atteinte, la pièce fusible cassera brutalement sans passer par une phase de déformation permanente difficilement détectable.

Selon un second aspect, l'invention a pour objet un procédé de montage d'un préhenseur selon le premier aspect, le procédé étant remarquable en ce qu'il comprend une étape de montage d'une pièce de support d'un porte-outil sur une pièce fusible montrant au moins une zone de résistance mécanique amoindrie de manière à se rompre sous l'application d'une force supérieure à un seuil donné.

Selon une mise en oeuvre préférée, la pièce de support montrant un pied d'ancrage et la pièce fusible étant tubulaire, ladite étape de montage comprend l'emmanchement dudit pied d'ancrage dans ladite pièce fusible. De préférence, la pièce de support est enfoncée dans la pièce fusible jusqu'à ce que le pied d'ancrage vienne se placer en butée contre la surface interne de l'épaulement. Avantageusement, la fixation est effectuée par la mise en place d'une goupille après contre-perçage du pied d'ancrage.

Selon une mise en œuvre préférée, le procédé comprend en outre une étape de montage d'une pièce fusible sur un corps creux porté par l'embase ou formé par une coulisse montée sur ladite embase. De préférence, la pièce fusible est enfoncée dans le corps creux jusqu'à ce que l'extrémité du corps creux se place en butée contre la surface externe de l'épaulement. Avantageusement, la fixation est effectuée par la mise en place d'une goupille après contre-perçage de la pièce fusible.

L'invention sera bien comprise et d'autres aspects et avantages apparaîtront clairement à la lecture de la description qui suit, donnée à titre d'exemple en référence aux planches de dessins sur lesquelles :
- La figure 1 est une vue d'un système de préhension selon l'art antérieur.
- La figure 2 est une vue d'un préhenseur selon l'invention.
- La figure 3 est une vue d'un moyen de support selon l'invention.
- La figure 4 est une vue d'une pièce fusible selon l'invention.
- La figure 5 est une vue en coupe d'un moyen de support selon l'invention.

Dans la description qui suit le terme « comprendre » est synonyme de « inclure » est n'est pas limitatif en ce qui concerne la présence d'autres éléments dans le préhenseur ou d'autres étapes dans le procédé auquel il se rapporte. Il est entendu que le terme « comprendre » inclut les termes « consister en ». Sur les différentes figures, les mêmes références désignent des éléments identiques ou similaires.

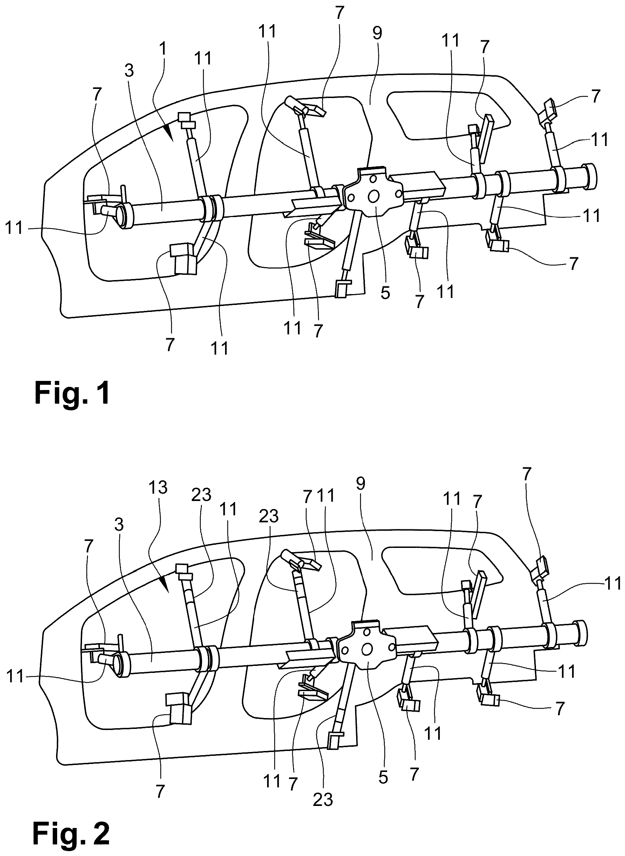

La figure 1 ayant été commentée en partie introductive, on se référera à présent à la figure 2 illustrant un préhenseur 13 selon l'invention. Le procédé de montage (ou de réparation) du préhenseur et le préhenseur en tant que tels seront décrits conjointement. Le préhenseur 13 comprend une structure générale similaire à celle de l'art antérieur avec au moins une poutre 3 de structure, au moins un outil 7 de préhension et au moins un moyen de support 11 d'un outil 7 de préhension. La ou les poutres 3 de structure sont préférentiellement constituées d'un profilé en acier se présentant, par exemple, sous une forme de tube ou de barre. La ou les poutres 3 montrent avantageusement un profil circulaire afin de faciliter le réglage de la position du ou des bras sur la poutre concernée.

Selon l'invention, le préhenseur 13 peut comprendre une poutre 3 de structure centrale, mais il est envisageable qu'il comporte deux poutres parallèles et solidaires l'une de l'autre au moyen notamment d'une ou plusieurs entretoises. Une architecture à plusieurs poutres est avantageuse pour la préhension de pièces de carrosserie de poids élevé. La ou les poutres 3 de structure s'entendent selon une direction principale et le ou les moyens de support 11 s'étendent généralement selon une direction non parallèle à ladite direction principale, généralement orthogonale à celle-ci.

Idéalement, et de manière connue, le préhenseur 13 comprend également une interface de fixation 5 à une main de robot de manipulation montée généralement de manière fixe sur la ou les poutres de support 3. De manière connue, l'interface de fixation 5 comprend une platine de fixation et un dispositif de fixation de ladite platine à la ou aux poutres 3 de support. Avantageusement, l'interface de fixation 5 est montée en partie centrale de la ou des poutres 3 de support.

Le préhenseur 13 selon l'invention va présenter de manière connue au moins un, de préférence au moins deux et plus préférentiellement au moins trois outils 7 de préhension conçus pour la préhension d'une pièce de carrosserie 9. Les outils 7 de préhension comprennent un moyen de serrage de la pièce de carrosserie 9, notamment de type pince et/ou au moins une ventouse. Les pinces peuvent être de type mécanique et se présenter sous une forme de pince de serrage avec une mâchoire de serrage. Eventuellement, elles peuvent être de type électromagnétique. Les outils peuvent aussi comprendre ou se présenter sous forme d'une ou plusieurs ventouses de maintien. L'homme du métier pourra envisager l'emploi d'autres outils de préhension.

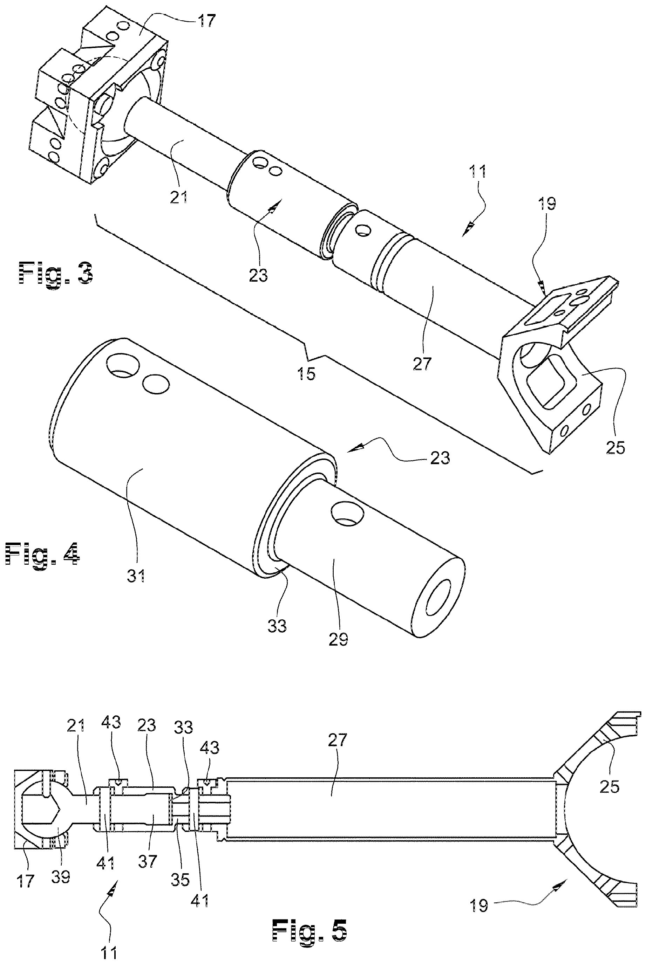

Chaque outil 7 de préhension est monté sur la poutre par un moyen de support 11 illustré en figure 3 et comprenant un bras 15 au bout duquel est fixé un porte-outil 17. Selon l'invention, le bras 15 comprend une embase 19 de fixation à une poutre de structure (non représentée en figure 3) et une pièce de support 21 du porte-outil 17. Le préhenseur selon l'invention est remarquable en ce que le bras 15 comprend en outre une pièce fusible 23 montrant au moins une zone avec une résistance mécanique diminuée de manière à se rompre sous l'application d'une force supérieure à un seuil donné, ladite pièce fusible 23 étant agencée entre la pièce de support 21 du porte-outil 17 et l'embase 19.

Selon un mode de réalisation préféré de l'invention, l'embase 19 comporte un étrier constitué d'une bride semi-annulaire 25 et d'une contre-bride semi-annulaire (visible en figure 5) montées serrées autour de la poutre concernée, ledit étrier étant réglable en coulissement et en rotation sur ladite poutre avant serrage de la contre-bride sur la bride. Le préhenseur offre donc deux premières possibilités de réglage de la position de l'outil de préhension.

Selon un mode de réalisation de l'invention, l'embase 19 comprend en outre un corps creux 27 tubulaire faisant saillie de la bride 25 et dans lequel est montée la pièce fusible 23. La pièce fusible 23 peut être montée réglable en coulissement. De manière alternative, une coulisse est montée réglable en coulissement sur le corps creux de ladite embase. Cette architecture est intéressante en ce qu'elle permet de former un bras 15 télescopique réglable en longueur. Selon une mise en œuvre préférée de l'invention, le réglage se fait en sélectionnant une embase 19 dont le corps creux 27 montre une longueur adéquate et le montage de la pièce fusible 23 se fait selon une position standard à l'extrémité libre dudit corps creux 27. La possibilité de variation de la longueur du ou des bras 15 est une troisième possibilité de réglage de la position du ou des outils 7 de préhension. La position de la pièce fusible 23 peut être fixée par vissage, éventuellement avec une goupille de maintien en position.

La pièce fusible 23 est configurée pour faire la liaison entre la pièce de support 21 du porte-outil et l'embase 19 ou entre la pièce de support du porte-outil et une coulisse montée sur l'embase. C'est une pièce de raccordement pouvant se présenter sous forme d'une barre. Préférentiellement, comme illustré en figure 4, la pièce fusible 23 est une pièce de raccordement montrant deux extrémités (29, 31) et se présentant sous une forme de manchon et montre donc une structure creuse de type tubulaire. La pièce fusible 23 se place sur ou dans le corps creux 27 ou la coulisse par une de ses extrémités 29 et collabore avec une pièce de support 21 du porte-outil 17 au moyen de son autre extrémité 31.

Au moins une pièce fusible est une pièce tubulaire présentant deux extrémités (29, 31) et un épaulement 33 sur sa longueur de manière à ce qu'une des extrémités 31 montre un diamètre supérieur au diamètre montré par l'autre extrémité 29. Dans notre exemple de réalisation, et de préférence, l'extrémité 31 de plus grand diamètre est destinée à coopérer avec la pièce de support 21 du porte-outil. Cette configuration offre deux avantages : d'une part, elle permet d'utiliser une pièce de support 21 du porte-outil qui comprend un pied d'ancrage 37 de section pleine, donc plus solide, ce qui favorise la rupture au niveau de la pièce fusible 23 et non pas de la pièce de support 21 du porte-outil. D'autre part, cela permet d'utiliser une pièce de support 21 du porte-outil dont le pied d'ancrage 37 a un diamètre plus important que dans l'art antérieur, donc plus solide également.

Au moins une pièce fusible 23 montre une zone 35 de résistance mécanique amoindrie (visible en figure 5) agencée à la base de l'épaulement 33 sur la partie de la pièce de plus petit diamètre. Par exemple, la zone 35 de résistance mécanique amoindrie d'au moins une pièce fusible est une zone montrant une épaisseur réduite par rapport à l'épaisseur montrée par le reste du corps de ladite pièce fusible 23. Lorsque la pièce est tubulaire, l'épaisseur s'entend comme étant la différence entre le diamètre intérieur et le diamètre extérieur dudit tube. Cette zone ou section d'épaisseur réduite peut être obtenue par usinage de la surface extérieure dudit tube.

L'un des avantages de l'invention est qu'il est possible que la pièce fusible 23 soit une pièce ne montrant aucune fonction de réglage de manière à ce que son remplacement soit le plus rapide possible, les fonctions de réglage étant portées par d'autres pièces. A cet effet, l'épaulement 33 montré par la pièce fusible 23 joue un rôle puisqu'il permet un positionnement standard et répétable de la pièce fusible 23 par rapport à l'embase 19 ou la coulisse d'une part et/ou par rapport à la pièce de support 21 du porte-outil.

Ainsi, selon un mode de réalisation préféré de l'invention, au moins une pièce fusible 23 est insérée par son extrémité 29 de plus petit diamètre dans un corps creux 27 présenté par une embase 19 ou dans un corps creux formé par une coulisse. De manière optionnelle, la pièce fusible 23 est insérée dans le corps creux 27 jusqu'à ce que l'extrémité du corps creux vienne se placer en butée contre la surface externe de l'épaulement 33. Une fois insérée dans le corps creux, la position de la pièce de support 21 est fixée, par exemple, par vissage d'au moins une vis 43 (visible en figure 5) et par au moins une goupille 41 additionnelle.

De manière complémentaire ou alternative, au moins une pièce de support du porte-outil comprend un pied d'ancrage inséré dans une pièce fusible ; de préférence jusqu'à ce que le pied d'ancrage se place en butée contre la surface interne de l'épaulement.

Selon l'invention, la position du porte-outil 17 sur le bras 15 peut être réglée selon une quatrième possibilité de réglage de la position de l'outil, à savoir par un réglage en rotation de l'outil. A cet effet, le porte-outil comprendra avantageusement une rotule 39 destinée à coopérer avec des moyens complémentaires, tels qu'une cavité hémisphérique, portés par le porte-outil 17. Avantageusement, au moins une pièce de support 21 du porte-outil comprend une rotule 39 pour la fixation du porte-outil 17 et l'extrémité libre du pied d'ancrage 37 est disposée à au moins 8 cm du centre de la rotule 39 ; de préférence à au moins 10 cm. Cette disposition est avantageuse par l'effet levier qu'elle procure. La zone de résistance mécanique amoindrie 35, ou zone fusible, est en effet décalée par rapport au centre de la rotule 39 par rapport à la configuration connue dans l'art antérieur, ce qui permet de soulever des masses plus importantes. En effet, dans l'art antérieur, la zone fusible se trouvait à la base de la rotule.

De manière optionnelle, et avec l'objectif de favoriser sa rupture sous l'action d'une force supérieure à un seuil donné, la pièce fusible 23 n'est pas réalisée en acier, mais en un alliage d'aluminium de type 7075. Ce type d'alliage à base de zinc est connu et commercialement disponible. Il compte environ 5,6 à 6,1 % de zinc, 2,1-2,5 % de magnésium, de 1,2 à 1,6 % de cuivre, et moins de 0,5 % de silicium, fer, manganèse, titane, chrome et autres métaux. Il est notamment commercialisé sous la marque Fortal.

## Revendications

1. Préhenseur (13) comprenant au moins une poutre (3) de structure, au moins un outil de préhension (7) et au moins un moyen de support (11) d'un outil de préhension (7), ledit moyen de support (11) comprenant un bras (15) au bout duquel est monté un porte-outil (17), le bras (15) comprenant une embase (19) de fixation à une poutre (3) de structure et une pièce de support (21) du porte-outil, le bras (15) (15) comprenant en outre une pièce fusible (23) montrant au moins une zone (35) de résistance mécanique amoindrie de manière à se rompre sous l'application d'une force supérieure à un seuil donné, ladite pièce fusible (23) étant agencée entre la pièce de support (21) du porte-outil et l'embase (19), **caractérisé en ce que** ladite pièce fusible (23) est une pièce tubulaire qui présente deux extrémités (29 ; 31) et un épaulement (33) sur sa longueur de manière à ce qu'une des extrémités (31) montre un diamètre supérieur au diamètre montré par l'autre extrémité (29); de préférence l'extrémité (31) de plus grand diamètre est destinée à coopérer avec la pièce de support (21) du porte-outil, et **en ce que** ladite pièce fusible (23) montre une zone (35) de résistance mécanique amoindrie agencée à la base de l'épaulement (33).

2. Préhenseur (13) selon la revendication 1, caractérisé en ce ladite pièce fusible (23) se présente sous une forme de manchon de raccordement configuré pour faire la liaison entre la pièce de support (21) du porte-outil et l'embase (19) ou entre la pièce de support (21) du porte-outil et une coulisse montée sur l'embase (19).

3. Préhenseur (13) selon la revendication 1 ou 2 , **caractérisé en ce que** :
- ladite pièce fusible (23) est insérée par son extrémité (29) de plus petit diamètre dans un corps creux (27) présenté par une embase (19) ou dans un corps creux formé par une coulisse ; de préférence, la pièce fusible (23) est insérée dans le corps creux (27) jusqu'à ce que l'extrémité du corps creux (27) vienne se placer en butée contre la surface externe de l'épaulement (33); et/ou
- ladite pièce de support (21) du porte-outil comprend un pied d'ancrage (37) inséré dans la pièce fusible (23) ; de préférence jusqu'à ce que le pied d'ancrage (37) se place en butée contre la surface interne de l'épaulement (33).

4. Préhenseur (13) selon l'une des revendications 1 à 2, la ou les pièces fusibles (23) montrant un corps, le préhenseur (13) est **caractérisé en ce que** la zone (35) de résistance mécanique amoindrie de la pièce fusible (23) est une zone (35) montrant une épaisseur réduite par rapport à l'épaisseur montrée par le reste du corps de ladite pièce fusible (23).

5. Préhenseur (13) selon l'une des revendications 1 à 4, **caractérisé en ce que** le bras (15) est un bras télescopique comprenant une embase (19) et une coulisse montée réglable en coulissement sur ladite embase (19).

6. Préhenseur (13) selon l'une des revendications 1 à 5, la pièce de support (21) du porte-outil comprend un pied d'ancrage (37) montrant une extrémité libre, le préhenseur (13) étant **caractérisé en ce que** la pièce de support (21) du porte-outil comprend un pied d'ancrage (37) de section pleine et/ou **en ce que** la pièce de support (21) du porte-outil comprend une rotule (39) pour la fixation du porte-outil (17) et l'extrémité libre du pied d'ancrage (37) est disposée à au moins 8 cm du centre de la rotule (39) ; de préférence à au moins 10 cm.

7. Préhenseur (13) selon l'une des revendications 1 à 6, **caractérisé en ce que** la pièce fusible (23) est réalisée en un alliage d'aluminium de type 7075.

8. Procédé de montage d'un préhenseur (13) selon l'une des revendications 1 à 7, **caractérisé en ce qu'**il comprend une étape de montage d'une pièce de support (21) d'un porte-outil sur une pièce fusible (23) montrant au moins une zone (35) de résistance mécanique amoindrie de manière à se rompre sous l'application d'une force supérieure à un seuil donné ; de préférence la pièce de support (21) montrant un pied d'ancrage (37) et la pièce fusible (23) étant tubulaire, ladite étape de montage comprend l'emmanchement dudit pied d'ancrage (37) dans ladite pièce fusible (23).

## Patentansprüche

1. Greifer (13), der mindestens einen Strukturträger (3), mindestens ein Greifwerkzeug (7) und mindestens ein Tragmittel (11) für ein Greifwerkzeug (7) umfasst, wobei das Tragmittel (11) einen Arm (15) umfasst, an dessen Ende ein Werkzeugträger (17) angebracht ist, wobei der Arm (15) einen Sockel (19) zur Befestigung an einem Strukturträger (3) und ein Tragteil (21) für den Werkzeugträger umfasst, wobei der Arm (15) ferner ein Schmelzteil (23) umfasst, das mindestens eine Zone (35) mit verringerter mechanischer Festigkeit, sodass sie unter Anwendung einer Kraft bricht, die größer als eine gegebene Schwelle ist, wobei das Schmelzteil (23) zwischen dem Halteteil (21) des Werkzeughalters und dem Sockel (19) angeordnet ist, **dadurch gekennzeichnet, dass** das Schmelzteil (23) ein rohrförmiges Teil ist, das zwei Enden (29; 31) und eine Schulter (33) entlang seiner Länge aufweist, sodass eines der Enden (31) einen Durchmesser aufweist, der größer ist als der Durchmesser, der am anderen Ende (29), vorzugsweise am anderen Ende, gezeigt ist Ende (31) mit größerem Durchmesser ist dazu bestimmt, mit dem Trägerteil (21) des Werkzeughalters zusammenzuwirken, und dadurch, dass das Schmelzteil (23) einen Bereich (35) mit verringerter mechanischer Festigkeit aufweist, der an der Basis der Schulter (33) angeordnet ist.

2. Greifer (13) nach Anspruch 1, **dadurch gekennzeichnet, dass** das Sicherungselement (23) in Form einer Verbindungshülse ausgebildet ist, die so ausgebildet ist, dass sie die Verbindung zwischen dem Trägerelement (21) des Werkzeughalters und dem Sockel (19) oder zwischen dem Trägerelement (21) des Werkzeughalters und einer auf dem Sockel (19) angebrachten Kulisse herstellt.

3. Greifer (13) nach Anspruch 1 oder 2, **dadurch gekennzeichnet, dass** :
- das Schmelzteil (23) mit seinem Ende (29) kleineren Durchmessers in einen von einem Sockel (19) gebildeten Hohlkörper (27) oder in einen von einer Kulisse gebildeten Hohlkörper eingesetzt ist, wobei vorzugsweise das Schmelzteil (23) in den Hohlkörper (27) eingesetzt ist, bis das Ende des Hohlkörpers (27) an der Außenfläche der Schulter (33) anliegt, und/oder
- das Trägerteil (21) des Werkzeughalters umfasst einen in das Sicherungsstück (23) eingesetzten Verankerungsfuß (37), vorzugsweise bis der Verankerungsfuß (37) an der Innenfläche des Ansatzes (33) anliegt.

4. Greifer (13) nach einem der Ansprüche 1 bis 2, wobei das oder die schmelzbaren Teile (23) einen Körper aufweisen, der Greifer (13) **dadurch gekennzeichnet ist, dass** der Bereich (35) verminderter mechanischer Festigkeit des schmelzbaren Teils (23) ein Bereich (35) ist, der eine geringere Dicke aufweist als die Dicke, die der Rest des Körpers des schmelzbaren Teils (23) zeigt.

5. Greifer (13) nach einem der Ansprüche 1 bis 4, **dadurch gekennzeichnet, dass** der Arm (15) ein Teleskoparm ist, der einen Sockel (19) und eine Gleitführung umfasst, die verschiebbar auf dem Sockel (19) montiert ist.

6. Greifer (13) nach einem der Ansprüche 1 bis 5, wobei das Trägerteil (21) des Werkzeughalters einen ein freies Ende aufweisenden Verankerungsfuß (37) umfasst, wobei der Greifer (13) **dadurch gekennzeichnet ist, dass** das Trägerteil (21) des Werkzeughalters einen im Querschnitt vollen Verankerungsfuß (37) umfasst und/oder dass das Trägerteil (21) des Werkzeughalters eine Kugel (39) zur Befestigung des Werkzeughalters (17) umfasst und das freie Ende des Verankerungsfußes (37) am Verankerungsfuß angeordnet ist mindestens 8 cm vom Zentrum der Kugel (39; vorzugsweise mindestens 10 cm.

7. Greifer (13) nach einem der Ansprüche 1 bis 6, **dadurch gekennzeichnet, dass** das Schmelzteil (23) aus einer Aluminiumlegierung vom Typ 7075 hergestellt ist.

8. Verfahren zum Montieren eines Greifers (13) nach einem der Ansprüche 1 bis 7, **dadurch gekennzeichnet, dass** es einen Schritt des Montierens eines Trägerteils (21) eines Werkzeughalters an einem Schmelzteil (23) umfasst, das wenigstens eine Zone (35) mit verminderter mechanischer Festigkeit aufweist, sodass es unter Anwendung einer Kraft bricht, die größer als eine gegebene Schwelle ist; vorzugsweise das Trägerteil (21), das einen Verankerungsfuß (37) zeigt, und das Schmelzteil (23) röhrenförmig ist, wobei der Montageschritt das Montieren des Fußes umfasst Verankerung (37) in dem Schmelzteil (23).

## Claims

1. Gripper (13) comprising at least one structural beam (3), at least one gripping tool (7) and at least one support means (11) for a gripping tool (7), said support means (11) comprising an arm (15) at the end of which a tool holder (17) is mounted, the arm (15) comprising a base (19) for fixing to a structural beam (3) and a support part (21) of the tool holder, the arm (15) further comprising a fusible part (23) showing at least one area (35) of reduced mechanical strength so as to break under the application of a force greater than a given threshold, said fusible piece (23) being arranged between the support piece (21) of the tool holder and the base (19), **characterized in that** said fusible piece (23) is a tubular piece which has two ends (29; 31) and a shoulder (33) along its length so that one of the ends (31) shows a diameter greater than the diameter shown by the other end (29), preferably the end (3) 1) of larger diameter is intended to cooperate with the support part (21) of the tool holder, and **in that** said fusible part (23) shows a zone (35) of reduced mechanical strength arranged at the base of the shoulder (33).

2. Gripper (13) according to claim 1, **characterized in that** said fusible piece (23) is in the form of a connecting sleeve configured to make the connection between the tool-holder support piece (21) and the base (19) or between the tool-holder support piece (21) and a slide mounted on the base (19).

3. Gripper (13) according to claim 1 or 2, **characterized in that**:
- the fusible part (23) is inserted by its smaller diameter end (29) into a hollow body (27) provided by a base (19) or into a hollow body formed by a slide; preferably, the fusible part (23) is inserted into the hollow body (27) until the end of the hollow body (27) abuts against the outer surface of the shoulder (33) and/or
- the tool holder support part (21) comprises an anchoring foot (37) inserted into the fusible part (23), preferably until the anchoring foot (37) abuts against the inner surface of the shoulder (33).

4. Gripper (13) according to one of claims 1 to 2, the fusible part(s) (23) showing a body, the gripper (13) being **characterized in that** the region (35) of reduced mechanical strength of the fusible part (23) is a region (35) showing a reduced thickness with respect to the thickness shown by the rest of the body of said fusible part (23).

5. Gripper (13) according to one of claims 1 to 4, **characterized in that** the arm (15) is a telescopic arm comprising a base (19) and a slide mounted so as to be adjustable in sliding movement on the said base (19).

6. Gripper (13) according to one of claims 1 to 5, wherein the tool holder support part (21) comprises an anchoring foot (37) with a free end, wherein the gripper (13) is **characterized in that** the tool holder support part (21) comprises an anchoring foot (37) of solid cross-section and/or **in that** the tool holder support part (21) comprises a ball joint (39) for fixing the tool holder (17) and the free end of the anchoring foot (37) is arranged at least 8 cm from the center of the ball joint (39); preferably at least 10 cm.

7. Gripper (13) according to one of claims 1 to 6, **characterized in that** the fusible part (23) is made of a 7075-type aluminum alloy.

8. Method of mounting a gripper (13) according to one of claims 1 to 7, **characterized in that** it comprises a step of mounting a support piece (21) of a tool holder on a fusible piece (23) showing at least one region (35) of reduced mechanical strength so as to break under the application of a force greater than a given threshold; preferably the support piece (21) showing an anchoring foot (37) and the fusible piece (23) being tubular, said mounting step comprises the fitting of said anchoring foot (37) 7) in said fusible part (23).
